# EUROPEAN PATENT SPECIFICATION

(11) **EP 0 643 397 B1**
(45) Date of publication and mention of the grant of the patent: **15.12.1999**
(21) Application number: 94113794.5
(22) Date of filing: 02.09.1994
(51) Int. Cl.: H01B 1/12, C08G 73/02

(54) **Electrically conducting compositions**
Elektrisch leitfähige Zusammensetzungen
Compositions électriquement conductrices

(30) Priority: 03.09.1993 US 115536
(43) Date of publication of application: 15.03.1995
(73) Proprietor: NESTE OY, 02150 Espoo (FI); UNIAX CORPORATION, Santa Barbara, CA 93111 (US)
(72) Inventor: Ikkala, Olli, SF-00160 Helsinki (FI); Pietilä, Lars-Olof, SF-00120 Helsinki (FI); Passiniemi, Pentti, SF-00720 Helsinki (FI); Cao, Yong, Goleta, CA 93117-4012 (US); Andreatta, Alejandro, Santa Barbara, CA 93105 (US)
(74) Representative: Hansen, Bernd, Dr. Dipl.-Chem.

(56) References cited:
- EP-A- 0 545 729
- WO-A-92/18988
- WO-A-92/22911
- PATENT ABSTRACTS OF JAPAN vol. 17, no. 124 (C-1035) 16 March 1993 & JP-A-04 304 233 (TOMOEGAWA PAPER) 27 October 1992

## Description

### Field of Invention

This invention relates generally to conducting polymers, and more particularly relates to electrically conductive compositions and shaped articles, such as parts, containers, fibers, tapes, films, coatings and the like, from polyanilines and blends thereof; and to the use of the same compositions and conductive articles. More specifically, this invention relates to liquid-phase processable, electrically conducting polyaniline compositions comprising particular substituted aromatic and alicyclic compounds that simultaneously form hydrogen bonds and ring-ring interactions with, respectively, the NH-groups and the six-membered rings of the conducting polyanilines. The present conducting polyaniline compositions show drastically enhanced processibility and their blends with insulating or semiconducting materials exhibit significantly improved electrical properties.

### Background of the Invention

Electrically conductive, thermoplastic polymer compounds are of increased practical interest, for instance, for packaging electronic instruments and parts, and to solve a wide range of static discharge, electrostatic dissipation and electromagnetic shielding problems. Often, such compounds are made by mixing solid conductive particles such as carbon black, stainless steel fibers, silver or aluminum flakes or Nickel-coated fibers with insulating bulk thermoplastics, for example polystyrene, polyolefins, nylons, polycarbonate, acrylonitrile-butadiene- styrene copolymers (ABS), and the like. These filled compounds are subsequently processed into desired shapes and articles by common plastics processing methods such as extrusion, injection molding and the like. Major problems related to the above, so-called "filled" thermoplastic compounds are that processing of these materials is not trivial and is often associated with excessive machine wear; and the final compounds frequently exhibit undesirable mechanical properties such as brittleness and a reduced elongation to break in comparison with the corresponding properties of the unfilled matrix polymer.

More recently, there has been an increased interest in replacing such carbon black or metal particle-filled compounds with intrinsically electrically conductive polymers and their blends with common insulating polymers. The latter systems are believed to be more cost competitive, easier to process and to exhibit desirable mechanical properties. Among the various conductive polymers, the polyanilines in particular have attracted special attention because of their excellent environmental stability and their low production costs.

Polyaniline is well known in the art, and its synthesis and the preparation of the electrically conductive form of this polymer by, for example, contacting polyanilines with protonic acids resulting in salt complexes has been disclosed. Green, A.G., and Woodhead, A. E., "Aniline-black and Allied Compounds, Part 1," J. Chem. Soc., Vol. 101, pp. 1117 (1912); Kobayashi, et al., "Electrochemical Reactions ... of Polyaniline Film-Coated Electrodes," J. Electroanl. Chem., Vol. 177, pp. 281-91 (1984); US Patent Nos. 3,963,498, 4,025,463, 4,983,322 and 5,232,631; Chiang, J.-C. and MacDiarmid, A. G., "Polyaniline: Protonic Acid Doping of the Emeraldine Form to the Metallic Regime", Synthetic Metals, Vol. 13, p. 196 (1986); Salaneck, W.R. et al., "A Two-Dimensional-Surface "State" Diagram for Polyaniline", Synthetic Metals, Vol. 13, p. 297 (1986). Typical examples of protonic acids disclosed in the above prior art are HCl, H₂SO₄, sulfonic acids of the type R₁-SO₃H, phosphoric acids, etc. Such acids form salt complexes with polyaniline, which may exhibit electrical conductivities of 10⁻³ S/cm or more. Their electrical properties make these so-called "doped" polyanilines [or, as used hereinafter, polyaniline salt complexes], and their blends and compounds with common insulating bulk polymers, suitable for a variety of the anti-static and shielding applications that are currently served by metal or carbon black filled systems.

Processing of polyanilines in different forms has been disclosed in several patents and patent applications. Major distinctions exist in the techniques employed and final materials properties, depending on whether the polyanilines are processed in the non-doped/non-conducting, or conducting salt complex form, and whether the material is in the solid or fluid phase during the processing operation. Generally, it is preferred that the polyaniline exists in its conductive salt complex form and is in a fluid phase during processing. The former condition eliminates the need for post-processing doping, which is cumbersome and uneconomical; the second preference regarding the fluid phase allows the formation of more homogeneous and a greater variety of products in comparison with the limited possibilities encountered in solid state processing.

In US Patent 5,006,278 a conductive product is disclosed which has been made by mixing a liquid, a doping agent and an undoped polyaniline, whereafter the liquid has been removed by evaporation. Patent Specification WO 8901694 describes a processable polyaniline doped with a sulfonic acid. The disclosed polyaniline is useful in processing conducting polymer blends using polyethylene, polypropylene and polyamides as the matrix polymer. In Patent Specification WO 9013601 a polymer mixture is prepared by mixing a suitable liquid with a mixture of polyaniline and a multi-sulfonic acid, used as a doping agent, whereafter the liquid is evaporated. According to this specification, the doping is generally carried out at 20-25 °C. It is disclosed that the doping can be carried out as a heterogeneous reaction, followed by dissolution of the mixture in a suitable solvent. The processing into a final shape is carried out in the presence of a solvent. (p. 15, 1.23). Patent Specifications WO 9010297, EP 152 632 and US Patent 5,002,700 disclose the use of dodecylbenzenesulfonic acid as a doping agent for polyaniline. Patent Specification WO 9001775 describes the use of multisulfonic acids as doping agents for polyaniline with the advantage of better thermal stability compared with other sulfonic acids. In the examples of this specification, the doping of polyaniline has been carried out in a suspension of polyaniline and the sulfonic acid in an aqueous solution of formic acid. In none of the examples of the above mentioned patent specifications, however, have adequate and economical methods been disclosed for processing of conductive polyanilines simply in their fluid form; i.e. by, for example, classic melt processing techniques employed in the thermoplastic polymer industry.

On the contrary, in the prior art, so-called "melt" processing of compounds comprising conductive polyanilines, has been executed by mechanically mixing of the components, wherein the conductive polyaniline is in the **solid phase** and only the matrix polymer in its **molten** form, before shaping the blend into the desired article. Generally, the blends obtained in this manner exhibit varying conductivity, often are non-homogeneous and, generally show poor mechanical properties and require a high content of polyaniline particles for the onset of electrical conductivity. In that sense such -erroneously labeled-"melt"-processible conductive thermoplastics closely resemble the well-known carbon black or metal particle-filled systems described above. For example, in Plastics Technology **37** (1991):9 p. 19-20 is disclosed the use of protonated, conductive polyanilines to impart conductivity to mixtures with common insulating thermoplastic polymers such as nylons and poly(vinylchloride). In this reference, the conductive polyaniline is in the form of solid, intractable particles, which, much like carbon black, are dispersed in the non-conducting matrix in its molten form. "Melt"-processing of these compounds require special dispersion techniques; Patent Specifications Nos. EP 168 620 and 168 621. As stated above, a relatively high content of conductive polyaniline is required to reach desirable levels of conductivity in the polyblend; or, in other words, the percolation threshold for the onset of conductivity is relatively high. [As used hereinafter, the percolation threshold is defined as the weight fraction of conductive material needed to impart a conductivity of 10⁻⁸ S/cm or more to a blend with an insulating matrix polymer.] Thus, in the aforementioned blends of solid polyaniline particles dispersed in poly(vinylchloride) a percolation threshold existed of about at least 13 % w/w of the conductive polyaniline. Such high content of conductive polyaniline particles is not desirable, because it is not economical and, in addition, may substantially alter the mechanical properties of the blend in comparison with those of the pure matrix polymer.

An improved method of making homogeneous conductive polyaniline complexes in a semi-fluid phase, and blends of reduced percolation threshold has been disclosed in European Patent Application EP 545,729. According to this application, polyaniline, or derivatives thereof, and an excess of a functionalized organic protonic acid are mechanically mixed. A **liquid-like** mixture or suspension is obtained which subsequently is thermally solidified between 40-250 °C. As a result, a dry, solid composition is obtained in the form of a granulate comprising a functionalized protonic acid-doped polyaniline. The latter composition can subsequently be mixed with a thermoplastic polymer and formed into parts of desired shapes using standard polymer melt-processing techniques. Percolation thresholds for the onset of conductivity of parts made according to this method were lower than in the case where solid polyaniline particles were mixed with thermoplastic matrix materials. However, use of the required excess quantity of protonic acid is highly undesirable, as it causes the materials to be acidic, corrosive and hygroscopic, which is undesirable for processing and application of these compositions.

US Patent 5,232,631 discloses solution- and melt-processible polyaniline compositions and blends that exhibit much lower percolation thresholds, sometimes even below 1 % w/w, of conductive polyaniline and a wide variety of non-conducting matrix polymers; such as, polyethylenes, isotactic polypropylene, elastomers, and the like; poly(vinylchloride), polystyrene, nylons, such as nylon 6, nylon 12, and the like; poly(methylmethacrylate), polycarbonate, acrylonitrile-butadiene-styrene copolymers (ABS), and the like. However, in this patent the compositions that exhibit a low percolation threshold, invariably, are made from solutions of the conductive polyaniline and the matrix polymers in volatile organic solvents, which is uneconomical and environmentally hazardous and limits the use to products such as film, coatings and fibers. In the same patent, mixtures of conductive polyaniline and insulating matrix polymers, such as polyethylenes and isotactic polypropylene, are disclosed that are processed from the melt. However, in the examples shown, the percolation threshold was only slightly lower than for mixtures in which the conductive polyaniline is in the solid form during processing and simply dispersed; cf. Plastics Technology 37 (1991):9 p. 19-20. In addition, in this US Patent 5,232,631, and in Patent Application FI 915760 it is disclosed that, in order to process conductive polyaniline from the melt and affect even a modest reduction in percolation threshold, an excess of protonic acid is needed, which renders the final blend undesirably acidic. As was pointed out above, the latter generally is unacceptable from a processing, application and environmental point of view. The excess acid, of course, can be removed, but this process is tedious and uneconomical, and limits the scope of the products that can be manufactured.

U. S. Patent Application Ser. No. 07/927858 teaches the use of reaction products of metal compounds and protonic acids as plasticizers for conducting polyanilines and for reducing the percolation threshold for the onset of conductivity in blends comprising bulk polymers; and for neutralizing acidic, protonated polyaniline compositions. This reference specifically teaches the use of the reaction product between zinc oxide and dodecylbenzenesulfonic acid as a plasticizer and neutralization agent for conducting forms of polyaniline and blends thereof. The use of the aforementioned reaction product in conducting polyaniline compositions, however, involves additional process steps that are uneconomical and reduce the environmental stability of the final materials. In addition, manufacturing of the above metal oxide-acid reaction products involves large amounts of highly corrosive and highly hygroscopic acids, which is unacceptable from a production and processing point of view.

Generally, the use of plasticizers are well known to those skilled in the art of polymer technology, and, not surprisingly, also has been employed in conductive polymer processing; EP 497514, U.S. Patent 5,171,478 and WO 92/22911. Typically, plasticizers are used to enhance flow, and/or reduce the viscosity of polymeric materials during processing; and generally form a part of the polymer composition. Along these well-known uses, EP 497514 cited *supra* teaches the use of highly polar, ester-free plasticizer to plasticize the thermoplastic component of polymer blends comprising polyaniline. According to the text of this Patent Specification, the plasticizer is selected to facilitate the flow only of the thermoplastic matrix, such as poly(vinyl chloride); and not to induce flow, or dissolve the polyaniline.

U.S. Patent 5,171,478, teaches the use of an extraordinary wide variety of chemical species termed plasticizers, ranging from water, p-toluene sulfonic acid to synthetic waxes and fluorinated hydrocarbons, to assist in thermally induced chain coupling of polyaniline which, according to the text, should be in the solid state (col. 6, 1. 25). Clearly, as is evident from the latter statement, and judging from their chemical nature, the suggested "plasticizing" species are not intended to facilitate flow, or dissolve the polyaniline component in the compositions.

Conventional use of commercially available plasticizers was disclosed in WO 92/22911. For example, Mesamoll (Bayer) was employed in a blend of conductive polyaniline and poly(vinyl chloride). However, Mesamoll is not a solvent for conductive polyaniline, and much like in the results in the above cited Plastics Technology **37** (1991):9 p. 19-20 a percolation threshold existed of more than 10 % w/w of the conductive polyaniline.

Thus, in summary, clearly, a need still exists for electrically conductive polyaniline compositions that can be processed in the fluid phase that do not contain an excess of protonic acids; and for electrically conducting polyaniline blends with insulating bulk polymers that exhibit improved processability properties, morphology and electrical properties in combination with reduced acidity and hygroscopic properties and reduced percolation thresholds over the conducting polyaniline compositions known in the art. This need is addressed by the discoveries made by the present inventors that particular substituted compounds during processing simultaneously acts as;
i. solvent for electrically conductive polyaniline complexes during processing; and
ii. compatibilizer in blends with insulating or semiconducting bulk polymers; thus yielding drastically reduced percolation thresholds for the onset of conductivity of such blends.

As is evident from the above analysis of the prior art of conducting polymer processing, no specific advantages are taught or suggested of employing particular substituted compounds that render conductive polyaniline fluid during processing, enhance flow, and reduce the percolation threshold in blends with insulating or semiconducting polymers. It will be demonstrated in the following description of the invention, and more specifically illustrated in the Examples attached hereto, that particular geometric arrangements of the various substituents are unexpectedly useful; and, in addition, in some cases may lead to the extremely unusual formation of useful crystalline solvates of electrically conductive polyaniline salt complexes and the particular substituted compounds. The latter compositions are remarkable in that they exhibit novel crystal structures that are different from either of their constituents; and have controllable melting temperatures.

### Summary of the invention

It is accordingly an object of the present invention to provide electrically conductive compositions comprising electrically conducting polyaniline salt complexes that exhibit improved processibility and reduced acidity.

It is additionally an object of the present invention to provide electrically conductive compositions of conducting polyaniline salt complexes of improved processiblity and reduced acidity comprising particular substituted aromatic and alicyclic compounds that simultaneously form at least three of: one or more hydrogen bonds and one or more ring-ring interactions with, respectively, the NH-groups and the six-membered rings of the electrically conducting polyaniline salt complexes.

Yet another object of the present invention is to provide novel crystalline solvates comprising electrically conductive polyaniline complexes and said substituted compounds.

Still another object of the present invention to provide conductive blend compositions that exhibit improved processibility, reduced acidity, and reduced percolation thresholds for the onset of conductivity, comprising insulating or semiconducting bulk polymers and pre-polymers, electrically conductive polyaniline salt complexes and particular substituted compounds that simultaneously form at least three of: one or more hydrogen bonds and one or more ring-ring interactions with, respectively, the NH-groups and the six-membered rings of the electrically conducting polyaniline salt complexes, that can be processed from solution or from the melt.

Another object still of the present invention is to provide polymeric blends of insulating or semiconducting polymers comprising novel crystalline solvates of electrically conductive polyaniline complexes and substituted compounds.

It is still another object of the present invention to provide shaped articles, fibres, coatings, films, tapes and the like from electrically conductive compositions comprising electrically conducting polyaniline salt complexes and particular substituted compounds that simultaneously form at least three of: one or more hydrogen bond and one or more ring-ring interactions with, respectively, the NH-groups and the six-membered rings of the electrically conducting polyaniline salt complexes.

Another object still of the present invention to provide shaped articles, fibres, coatings, films, tapes and the like from electrically conductive compositions comprising electrically conducting polyaniline salt complexes, particular substituted compounds that simultaneously at least three of: form one or more hydrogen bonds and one or more ring-ring interactions with, respectively, the NH-groups and the six-membered rings of the electrically conducting polyaniline salt complexes, and insulating or semiconducting bulk polymers and pre-polymers.

Another object still yet of the present invention to provide shaped articles, fibres, coatings, films, tapes and the like from electrically conductive compositions comprising novel crystalline solvates of electrically conductive polyaniline complexes and substituted compounds, and insulating or semiconducting bulk polymers and pre-polymers.

Additional objects, advantages and novel features of the invention will be set forth, in the description which follows. The objects and advantages of the invention may be realized and attained by means of the instrumentalities and combinations particularly pointed out in the appended claims.

### Description of Figures

Figure 1. The electrical conductivity of melt-processed blends of polypropylene, PANI(DBSA)_{0.5} and stearyl gallate (SG) plotted as a function of the content of the conducting polyaniline salt complex.

Figure 2. Wide-angle X-ray diffraction patterns of, respectively (a) PANI(DBSA)_{0.5}, (b) SG and the composition (c) PANI(DBSA)_{0.5}(SG)_{0.5}.

### Detailed Description of the Invention

The electrically conducting compositions of this invention typically comprise the following ingredients.
(i) One or more electrically conducting unsubstituted or substituted polyaniline or co-polymer salt complexes, or mixtures thereof;
(ii) One or more substituted compounds as defined in claim 1 that simultaneously form at least three of: one or more hydrogen bonds and one or more ring-ring interactions with, respectively, the NH-groups and the six-membered rings of the electrically conducting polyaniline salt complexes (i).
(iii) One or more optional organic substrate phases. This phase is an insulating or semiconducting material, and can be one or more polymers or pre-polymers, or mixtures thereof, which is fluid during compounding or mixing with (i) and (ii) and/or during shaping into the conductive article.

Surprisingly, the inventors have discovered that, unlike the electrically conductive compositions described in the prior art, the materials according to the present invention, which do not contain an excess protonic acid;
i. display outstanding processability in the **fluid** form, i.e. solution or melt;
ii. are substantially less acidic; and
iii. are less hygroscopic;
and, in addition, in blends with insulating or semiconducting matrix polymers;
iv. exhibit improved compatibility between the conducting polyaniline salt complex and the matrix material; which results in
v. a remarkably low percolation threshold for the onset of conductivity.

Furthermore, the inventors have discovered extremely unusual crystalline solvates of electrically conductive polyaniline salt complexes and substituted compounds. The latter compositions are remarkable in that they exhibit novel crystal structures that are different from either of their constituents; and have controllable melting temperatures.

### The Electrically Conducting Polyaniline

One ingredient in the present compositions is electrically conducting unsubstituted or substituted polyaniline salt complexes or an electrically conducting polyaniline copolymer salt complex, or mixtures thereof, as described in US Patents 5,069,820 and 5,160,457 and U.S. Patent 5,232,631. When the term "electrically conducting polyaniline salt complex" is used in this application, it is used generically to include electrically conducting unsubstituted and substituted polyanilines and electrically conducting polyaniline copolymers, and mixtures thereof, that have been rendered electrically conducting by protonation of the corresponding non-conducting forms of polyanilines by the use of one or more strong protonic acids with a pKa value of less than about 3.0; unless the context is clear that only the specific nonsubstituted form is intended.

The non-conducting polyaniline used for the preparation of the electrically conductive polyaniline salt complexes according to practice of this invention can be in any of its physical forms. Illustrative of useful forms are those described in US Patents 5,232,631 and 4,983,322, incorporated by reference herein. For unsubstituted polyaniline, useful forms include leucoemeraldine, protoemeraldine, emeraldine, nigraniline and pernigraniline forms. Useful polyanilines can be prepared by any chemical and electrochemical synthetic procedures referred to, for example, in the above references incorporated herein.

In general, the non-conducting forms of polyanilines useful for the preparation of the electrically conductive polyaniline salt complexes used in practice of this invention are those which are of sufficiently high molecular weight to exhibit high electrical conductivity; i.e. those polyanilines having a weight average molecular weight of more than 5,000 daltons. In general substituted and unsubstituted polyanilines and polyaniline copolymers will be of at least 20 repeat units. In the preferred embodiments of the invention, the number of repeat units is at least about 25, and in the most preferred embodiments, the number of repeat units is at least about 50.

Particularly preferred for the use in the practice of this invention, is the electrically conducting polyaniline that is derived from non-conducting unsubstituted polyaniline and protonated to its electrically conducting form by the use of one or more protonic acids that have a pKa value of less than about 3.0. Preferred protonic acids are those that protonate the polyaniline to form a salt complex, having an electrical conductivity of greater than about 10⁻⁶ S/cm. Among the preferred protonic acids, particularly preferred are those that belong to the class of acids that impart a conductivity of greater than about 10⁻³ S/cm to the salt complex with polyaniline. Amongst these particularly preferred embodiments, most preferred are those embodiments in which said polyaniline salt complex has a conductivity greater than about 1 S/cm.

Protonic acids are well known as dopants in the conductive polymer art as shown by the reference to J.-C. Chiang and A. G. MacDiarmid; the reference to W. R. Salaneck et. al. and to U.S. Patents 5,069,820 and 5,232,631.

### The Substituted Compound

A second, critical ingredient of the compositions of the present invention is one or more particular substituted compounds. These compounds are defined in claim 1. The unique roles of this substance are that of a "solvent-plasticizer" of conductive polyaniline complexes; and, additionally, of "compatibilizer" in blends of the conductive polymer with insulating or semiconductive polymers or pre-polymers.

Unlike commonly used plasticizers, which in the art of conductive polymer processing often are added to improve dispersion of solid conductive particles in molten polymers, the substituted compounds used according to the present invention, during processing **dissolve** the electrically conductive polyaniline salt complexes, and form strong molecular associations with them. Due to this unique feature, the conductive polyaniline salt complexes during processing are in their fluid form, which has the above described major advantages with regard to product homogeneity, properties, and shaping options. And, unlike commonly used solvents, the substituted compounds according to the present invention form a permanent and integral part of the compositions. Interestingly, and surprisingly, the molecular interactions between the substituted compounds and the electrically conductive polyaniline salt complexes may be so strong, that their mixtures can form the extraordinary class of materials known as crystalline solvates. These materials exhibit novel crystalline structures that are different from each of their constituent, and have many useful properties, such as controllable melting temperatures. In addition, depending on the specific properties of the substituted compounds, such solvates may exhibit unusual electrical, optical magnetic and mechanical characteristics.

The second important role of the substituted compounds of the present invention is that of a "compatibilizer" in blends of the conductive polyaniline complexes and insulating or semiconductive polymers or pre-polymers. The designation "compatibilizer" hereinafter refers to a species that the improves the interaction between two immiscible liquid phases through close matching of the physico-chemical nature of the species and the two liquids. Thus, for example, common surfactants reduce the interfacial tension of water and oil, and, therewith "compatibilize" these two liquids, as it is understood in this invention. This compatibilizing is achieved in this simple example by providing a species [the surfactant] that has two, covalently bonded moieties: one of which that strongly interacts with water; and the other moiety that has a favorable interaction with oil. The compatibilizing role of the substituted compounds according to the present invention in blends of the conducting polyaniline complexes and insulating or semiconductive polymers is similarly understood. For example, in blends of the conducting polyaniline complexes with insulating polymers selected from the group of polar polymers, such as nylons, the substituted compounds shall have a moiety that favorably interacts with the polar polymers, and hence contain common polar groups such as, for example -OH, -O-, -COOH, -COOCH₂-, -CO, -SH, -S-, -SO₂-, -PO₃-, -NO₂, -CN, -CON=, the halogens, -F, -Cl, -Br, -I; and the like. Alternatively, in blends with non-polar or weakly polar polymers, such as polyethylene, polypropylene, and the like, the substituted compound shall have a non-polar or weakly polar moiety, such as alkyls, alkenyl, cycloalkyls, phenyls, and the like. Clearly, the selection of the appropriate compound from the various substituted compounds, to be specified in detail hereafter, for optimum use in blends with insulating or semiconductive polymers is guided by the physico-chemical nature of the latter, according to the well-established rules of chemical affinity known to those skilled in the art.

The critically important feature of the substituted compounds according to the present invention is that they are capable of simultaneously forming hydrogen bonds and ring-ring interactions with, respectively, the NH-groups and the six-membered rings of conducting polyaniline salt complexes.

The substituted aromatic compounds used in the invention are those according to Formulas IV-IX: 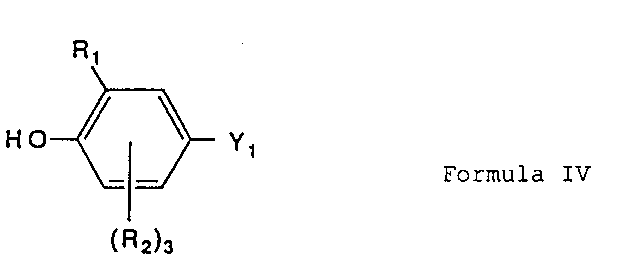 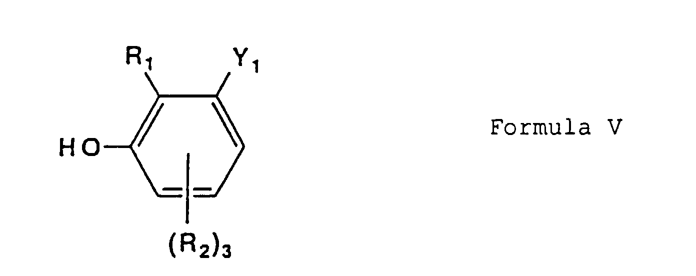 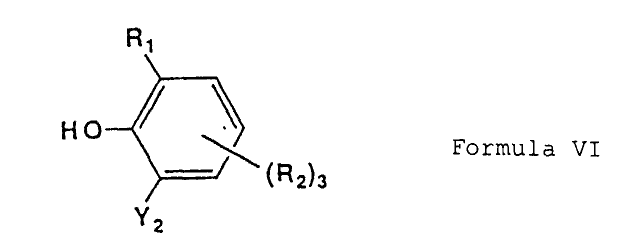 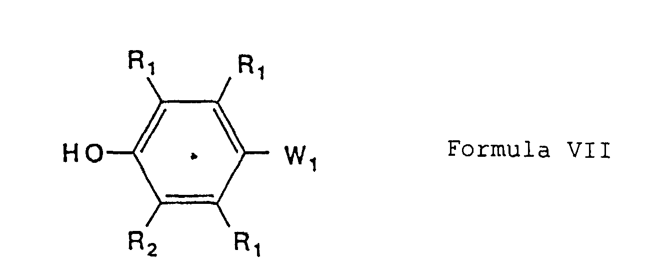 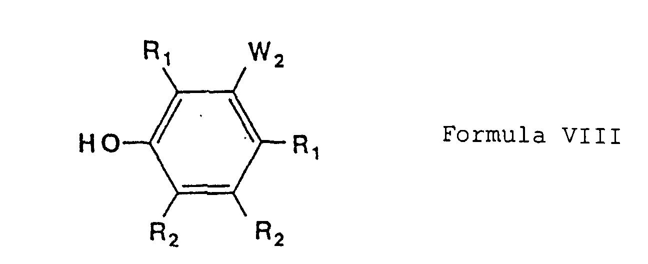 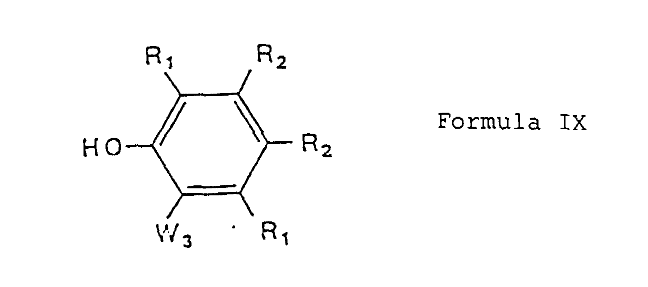 wherein:
R₁ is H, OH, CH₃ or OCH₃; where one or more H can be substituted by the halogens F or Cl; except in -OH;
R₂ is independently selected so as to be the same or different at each occurrence and is selected from H, OH, alkyl, alkenyl, alkoxy, alkanoyl, alkylthio, alkylthioalkyl, alkyl amide, alkylamidealkyl, alkyl hydroxy, alkyl carboxyl, having from 1 to 20 carbon atoms; or alkylaryl, arylalkyl, alkylsulfinyl, alkoxyalkyl, alkylsulfonyl, alkoxycarbonyl, where the alkyl or alkoxy has from 1 to 20 carbon atoms; or alkyl having from 1 to 20 carbon atoms; or any two R₂ groups together may form an alkylene or alkenylene chain completing a 3, 4, 5, 6, or 7-membered aromatic or alicyclic ring, which ring may optionally include one or more nitrogen, sulfur or oxygen atoms; R₂ can be branched and can be tert-alkyl, the alkyl having from 1 to 20 carbon atoms; R₂ may include one or more of the polar substitutes -NO₂, or -CN, or the halogens, -F, -Cl, -Br, -I;
Y₁ is selected from -OH, -COOH, -COO-Z, -CO-Z, -SO-Z, -SO₂-Z, -OCOO-Z, wherein Z= alkyl with 1 to 20 carbon atoms preferably more than 10 carbon atoms;
Y₂ is -OH;
W₁ is selected from X₁, -C(CₙH₂ₙ₊₁)(CₘH₂ₘ₊₁)-X₁, where n and m are integers from 1 to 20, -COO-X₁, -CO-X₁, -OCO-X₁, -CH₂-O-X₁ -O-CH₂-X₁, -O-X₁, -S-X₁, -SO-X₁, -SO₂-X₁, -OCOO-X₁, cyclohexane, or 5 or 6-membered aromatic, heteroalicyclic, heteroaromatic or alicyclic carbon ring; and
W₂ is selected from X₁, -C(CₙH₂ₙ₊₁)(CₘH₂ₘ₊₁)-X₁, where n and m are integers from 1 to 20, -COO-X₁, -CO-X₁, -OCO-X₁, -O-X₁, -S-X₁, -SO-X₁ -SO₂-X₁, -OCOO-X₁, -COO-CH₂-X₁, -OCO-CH₂-X₁,-CH₂-COO-X₁,-CH₂-OCO-X₁, -O-C₂H₄-O-X₁, cyclohexane, or 5 or 6-membered aromatic, heteroalicyclic, heteroaromatic or alicyclic carbon ring; and
W₃ is selected from X₁, -C(CₙH₂ₙ₊₁)(CₘH₂ₘ₊₁)-X₁, where n and m are integers from 1 to 20, -COO-X₁, -CO-X₁, -OCO-X₁, -O-X₁, -S-X₁, -SO-X₁ -SO₂-X₁, -OCOO-X₁, -CH₂-X₁, cyclohexane, or 5 or 6-membered aromatic, heteroalicyclic, heteroaromatic or alicyclic carbon ring; and 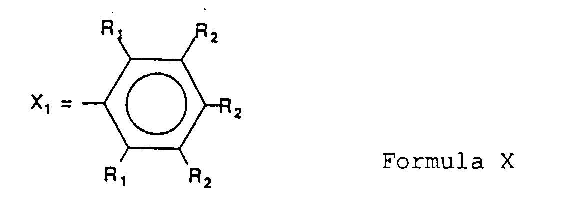 wherein R₁ and R₂ are as described above.

Among the especially preferred substituted aromatic compounds the most preferred compounds are those according to above Formulas IV-IX; with the proviso that at least one R₁, R₂, Y₁, Y₂, W₁, W₂ or W₃ substituent adjacent to at least one -OH substituent on any benzene ring is selected from H and -OH.

It is also envisaged that the substituted compounds are part of oligomeric or polymeric chain molecules; in the polymer chain or as pendant side-groups. Such oligomeric or polymeric substituted compounds can be prepared according to the usual polymerization or functionalization and substitution methods known to those skilled in the art of synthesis of oligomers and polymers. For example, in one embodiment, the substituted compounds of the present invention comprise a polymerizable moiety, such as substituted and unsubstituted unsaturated C-C bonds, or moieties that can be polymerized by well-known polycondensation methods. Such polymerizable compounds can be polymerized to yield an oligomeric or polymer chain comprising a multitude of substituted aromatic functional groups useful according to the present invention.

In another embodiment, oligomeric and polymeric materials can be functionalized with one or more substituted moieties according to the present invention. Such functionalization can be carried out according to any technique well known to those skilled in the art of substituted and functionalized polymers.

### The Substrate Phase

A fourth, optional, component of the materials of the compositions of this invention is a substrate phase. This can be oligomeric, or polymeric, or pre-polymeric materials which can be transformed into a fluid (liquid or semisolid) form during processing so as to achieve the required intimate mixing with the electrically conducting polyaniline salt complex and the solvent-plasticizing substituted compound. The substrate phase can be electrically insulating or semiconductive. Useful common polymeric substrates are those belonging to the group of thermoplastic and thermoset polymers.

Illustrative of thermoplastic polymers are polymers derived from the polymerization of α,β-unsaturated monomers such as polyethylene, acrylonitrile/butadiene/styrene terpolymer, polypropylene, poly(1-butene), poly(3-methyl-1-butene), poly(1-pentene), poly(4-methyl-1-pentene), poly(1-hexene), polyisobutylene, polyisoprene, polystyrene, poly(α-methylstyrene), poly(2-methylstyrene), poly(vinyl fluoride), poly(vinyl chloride), poly(tetrafluoroethylene)(Teflon), poly(vinyl alcohol), poly(vinyl methyl ether), poly(vinyl methyl ketone), poly(vinyl acetate), poly(vinyl pyrrolidone), poly(acrylic acid), poly(methyl methacrylate) and polyacrylonitrile, polydienes such as poly(1,3-butadiene); polyoxides such as poly(ethylene oxide), poly(propyleneoxide), polyacetaldehyde and poly(styrene oxide); polysulphides such as poly(propylene sulphide) and poly(phenylene sulphide); and polysulfones; polyesters such as poly(glycolic acid), poly(ethylene adipate), poly(ethylene succinate) and poly(ethylene terephtalate); polyamides such as nylon 6, nylon 7, nylon 8, nylon 9, nylon 10, nylon 6,6, nylon 8,8 and , poly(p-phenylene terephtalamide)(Kevlar); polycarbonates such as poly(methanebis(4-phenyl)carbonate).

Illustrative of thermoset polymers are polymers derived from alkyds derived from the esterification of a polybasic acid such as phtalic acid and a polyhydric acid such as glycol; allylics such as those produced by polymerization of diallyl phtalate, diallyl isophtalate and diallyl maleate; amino resins such as those produced by addition reaction between formaldehyde and such compounds as melamine, urea, sulfonamide; epoxies such as epoxy phenol novolak resins, diglycidyl ethers and diclycidylethers of bisphenol A; phenolics such as resins derived from reaction of substituted or unsubstituted phenols such as cresol, and phenol with an aldehyde, such as formaldehyde and acetaldehyd; polyesters; silicones and urethanes.

### Overall Compositions

The proportions of materials of the present invention can vary widely, depending on the desired level of conductivity and the application. However, the relative amounts of the electrically conducting polyaniline salt complexes and the substituted compounds is such that during processing a homogeneous solution and/or plasticized melt is obtained.

Typically, the compositions of this invention include electrically conductive polyaniline, substituted polyaniline, copolymers and/or mixtures thereof, produced by protonation with from about 0.1 to 0.6 moles of protonic acid per substituted or unsubstituted aniline repeat unit (PhN); more preferably from about 0.2 to 0.6 moles; and most preferred from about 0.3 to 0.5 moles of protonic acid.

The amount of substituted compound may vary widely, depending on the application, the desired conductivity, the molecular weight of the substituted compound, and the amount of electrically conductive polyaniline salt complex in the final composition. Typically, however, the molar ratio between amount of substituted compound and the polyaniline repeat unit PhN is from about 0.1 to about 100; more preferably from about 0.2 to 50 and most preferably from about 0.3 to 25.

The amount of insulating substrates in blends with the conductive polyaniline salt complexes and substituted compounds according to the present invention may vary widely, and is dependent on the desired level of conductivity. Hence, the content of insulating substrates ranges from at least 1 % by weight to 99.95 % by weight, preferably from about 5 % by weight to about 99.9 % by weight, and most preferably from about 10 % by weight to about 99.5 % by weight.

Optional common additional components may be included in the compositions of the present invention. Examples of such additional components include other conductive polymers, other polymers such as poly(3-alkylthiophenes) which may become conductive upon doping, graphite, metal conductors, reinforcing fibers, inert fillers (such as clays and glass), dyes and common plasticizers.

The method of preparing and forming the compositions of this invention is not critical and can vary widely. Standard polymer processing operations can be employed, such as solid-state blending and subsequent melting or dissolving, melt-blending and solution-blending or combinations thereof. Also, common shaping operations can be used to manufacture useful articles from the present compositions, such as extrusion, thermo-forming, blow molding, injection molding, rotational molding, reactive molding, foaming and the like; common fiber spinning methods can be employed, such as melt-spinning, dry-spinning, wet-spinning, air-gap spinning, gel-spinning, flash-spinning and the like; films can be cast from the melt or solutions of the present compositions to yield dense or porous articles or membranes, or can prepared by calendering and film-blowing.

In the event that additional non-soluble components are present (or suspended) in the compositions of the present invention, the protonated conductive polymer will form around, or be filled with, the insoluble material. If, for example, the additional components are glass fibers, the relative amounts of fibers and protonated conductive polymer remaining will cause either the polymer to be fiber-filled, the fibers to be polymer coated or impregnated, or some intermediate composite of fibers and protonated conductive polymer to be formed. In the case of systems wherein the amount of non-soluble component greatly exceeds the protonated conductive polymer remaining, individual particles or shapes of non-soluble components coated or impregnated with protonated conductive polymer will be formed. Examples of articles formed from non-soluble components and the present polymer solutions include conductive polymer coated housings for sensitive electronic equipment (microprocessors), infrared and microwave absorbing shields, flexible electrical conducting connectors, conductive bearings, brushes and semi-conducting photoconductor junctions, antistatic materials for packaging electronic components, carpet fibers, waxes for floors in computer rooms and an antistatic spray finisher for plastics, and thin, optically transparent antistatic finishes for CRT screens, aircraft and auto windows.

It is also contemplated to use the present compositions as either liquid conductor or liquid semiconductor, much in the manner that liquid mercury is used in various devices. Examples of such devices include gravity switches, fluid level detecting devices or other electrical or electronic switches.

### Method A-1

Polyaniline (PANI) was prepared according to the method described by Y. Cao, A. Andreatta, A. J. Heeger and P. Smith, Polymer, 30 (1989) 2305: A solution of 40 ml of freshly distilled aniline (Aldrich), 50 ml of 35% HCl (Fisher) and 400 ml distilled water was prepared in an 1L Erlenmeyer flask. The flask was placed in a cooling bath maintained at 0 °C. Polymerization was effected by addition of an oxidant solution consisting of 46 g of (NH₄)₂S₂O₈ (Aldrich) and 100 ml of distilled water. After all oxidant was added (over a period of time of 2 hr), the flask was capped and left stirring for an additional 3 hours. The precipitated polymer powder was recovered, filtered and washed with distilled water until the pH of the washing liquid was 6-7. Subsequently, the polymer was washed with methanol until the liquid was clear, and then with ethyl ether to eliminate residual water and methanol. Finally, the polymer was dried in a vacuum oven at room temperature for 48 hours.

The non-conductive emeraldine base form of polyaniline was prepared by compensation of the polyaniline salt. An amount of 10 g of polyaniline salt was stirred with 1000 ml of 3% NH₄OH solution during 2 hours at room temperature. The resulting emeraldine base was filtrated and washed by distilled water until the pH of washing liquid was 7-8. Subsequently, the polymer was washed by methanol until the washing liquid was colorless and then, with methanol and ethyl ether. The inherent viscosity of the obtained emeraldine base as measured in an Ubbelohde viscometer at a temperature of 25 °C in a 0.1 w/w solution in 97 % H₂SO₄ is typically 1.2 dL/g.

### Method A-2

Conductive polyaniline salt complexes were prepared by the following two methods:1) an amount of 1.81 g (0.02 M) emeraldine base (EB) prepared as in Method A-1, was mixed thoroughly with 3.265 g (0.01 M) of p-dodecylbenzene sulfonic acid (DBSA) (Tokyo Kasei) using an agate mortar and pestle in a dry bag filled with nitrogen. The molar ratio of DBSA to emeraldine base unit was 0.5; sufficient to completely protonate the emeraldine base form into the conducting salt form; 2) the same amount of emeraldine base and DBSA were mixed with 50 ml anhydrous ethanol and stirred at 50° C for one hour. After most of ethanol was removed, resulting powder was dried at vacuum oven at 50° C for 24 hours. Similarly, polyaniline-camphorsulfonic acid (CSA), toluenesulfonic acid (TSA) conductive salt complexes were prepared with molar ratio of acid/polyaniline repeat unit (PhN) equal to 0.5.

### Method B

1 part by weight of electrically conducting polyaniline salt complex and 10 weight parts of substituted compound were mixed in an Erlenmeyer flask in an oil bath for 5 minutes using a magnetic stirrer. The temperature of the oil bath was maintained constant typically between 160°C and 250°C, depending on the melting point of the substituted compound. After 5 minutes of mixing a sample was taken and pressed between two microscope glass slides and heated to the same temperature as where mixing was performed. The solubility of the electrically conducting polyaniline salt complex in the substituted compound was investigated using a polarizing light optical microscope. If a homogeneous, one-phase liquid, free of any remaining solid particles was observed, the substituted compound was classified as a solvent for the polyaniline complex at the temperature of mixing. If some dispersed particles with softened edges were observed the compound was designated as a poor solvent at the temperature of mixing. If a clear dispersion of solid particles without softened edges was observed, the substituted compound was classified as a nonsolvent for the conductive polyaniline complex at the temperature of mixing.

### Method C

An amount of 4.6 g of electrically conducting polyaniline salt complex, 13.8 g substituted compound and 27.6 g high density polyethylene powder (HDPE, Neste NCPE 3415, weight average molecular weight of 250000) were mechanically mixed in a mortar. The resulting dry blend was mixed using a Haake Rheocorder at a temperature of 190 ^{o}C for 5 minutes at a rotation speed of 100 rpm. After cooling the resulting blend, the material was molded, bar-shaped test pieces were cut and their electrical conductivity was measured using the conventional 4-probe method.

### Method D

An amount of 0.35 g of electrically conducting polyaniline salt complex, 1.05 g substituted compound and 2.1 g isotactic polypropylene powder (PP, Neste VC 12, weight average molecular weight 270000) were mixed together in a mortar. The above dry blend was mixed using a miniature, co-rotating conical twin-screw extruder at a temperature of 170 ^{o}C for 5 minutes and at rotation speed of 100 rpm. The resulting blends was discharged and subsequently, the material was compression molded into a film at 190°C, in 15 seconds and quickly cooled between two metal plates. The electrical conductivity of the resulting film was measured using the 4-probe method.

### Comparative Example I (Outside of the Invention)

Polyaniline (PANI) prepared according to Method A-1, was protonated according to method A-2 with dodecylbenzenesulfonic acid, (DBSA), (Tokyo Kasei), to give the electrically conducting polyaniline salt complex PANI(DBSA)_{0.5}. PANI(DBSA)_{0.5} was mixed, according to Method B, with, respectively, 1-decanol (Merck), 1,8-octanediol (Fluka), lauryl acid (Fluka), dodecyl amine (Fluka), stearic acid (Aldrich), Zn-stearate (Aldrich) and octyl succinic acid. The latter compound was prepared by mixing 100 g of n-octyl succinic anhydride (Chemie Linz) with 500 g distilled water at 60 °C for 30 minutes, filtered and dried the reaction product at 100 °C over night. The solubility of PANI(DBSA)_{0.5} in the above organic compounds was examined using an optical microscope. In all cases a clear dispersion of solid, unswollen PANI(DBSA)_{0.5} particles was observed and PANI(DBSA)_{0.5} was found to be completely insoluble in these compounds.

### Comparative Example II (Outside of the Invention)

PANI(DBSA)_{0.5} was mixed with 3-pentadecyl phenol (Aldrich) or (o,p)-toluenesulfonamide (Ketjenflex 9S, Akzo) according to Method B. The solubility of PANI(DBSA)_{0.5} in these compounds was examined using an optical microscope. A clear dispersion of solid, unswollen PANI(DBSA)_{0.5} particles was observed and PANI(DBSA)_{0.5} was found to be insoluble in these organic compounds.

A polymer blend was prepared of PANI(DBSA)_{0.5} and 3-pentadecyl phenol and HDPE at 190°C according to Method C, and of PANI(DBSA)_{0.5} and tert-octyl phenol and PP at 170°C according to Method D. The conductivity of the materials in both cases was below 1x10⁻⁹ S/cm.

### Comparative Example III (Outside of the Invention)

Comparative Example II (Outside of the Invention) was repeated with a variety of substituted aromatic compounds. All substances were found to be non-solvents for PANI(DBSA)_{0.5} according to Method B. Blends with polypropylene were prepared according to Method D. The results of the conductivity measurements are summarized in Table 1.

**Table 1**

| Conductivity of PANI(DBSA)_{0.5} /PP blends prepared with various substituted aromatic compounds. | |
|---|---|
| Compound | Conductivity, (S/cm) |
| 2,6 di-tert-butyl-4-methylphenol [BHT] | 3.2x10⁻⁹ |
| 3-pentadecylphenol | 1.0x10⁻⁹ |
| phenylsulfone | 5.4x10⁻¹⁰ |
| phenylsulfoxide | 5.4x10⁻¹⁰ |
| 4-aminophenol-dodecylbenzenesulfonic acid | 1.1x10⁻¹¹ |
| 2-aminophenol-dodecylbenzenesulfonic acid | 1.3x10⁻⁹ |
| cyclohexanediamine-(dodecylbenzenesulfonic acid)₂ | 9.7x10⁻⁹ |
| 2-amino-4-ethylsulfonylphenol -dodecylbenzenesulfonic acid | 4.4x10⁻¹⁰ |
| aminophenyl ether-dodecylbenzenesulfonic acid | <10⁻¹¹ |

Comparative Examples II - III demonstrate that non-solvent plasticizers do not lead to reduced percolation thresholds for the onset of conductivity in blends with the insulating polypropylene.

### Example 1

PANI(DBSA)_{0.5} was mixed with tert-butyl hydroquinone (Fluka) according to Method B at 200 °C and was found to form a homogeneous, particle-free solution with this substituted aromatic compound.

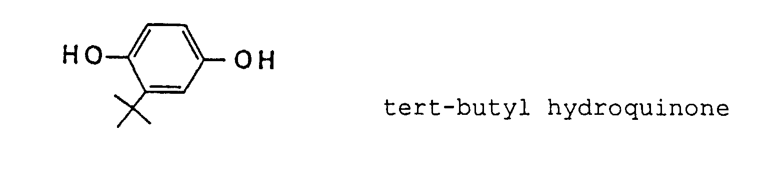

A blend was prepared of PANI(DBSA)_{0.5}, tert-butyl hydroquinone (Fluka) and high density polyethylene, (HDPE, Neste NCPE 3415), according to Method C at 190°C. The electrical conductivity was determined to be 3.5 x10⁻⁴ S/cm.

### Comparative Example IV (Outside of the Invention)

By contrast, PANI(DBSA)_{0.5} was not soluble in 3-tert-butyl-4-hydroxyanisole (Fluka) when mixed at 200 °C according to Method B.

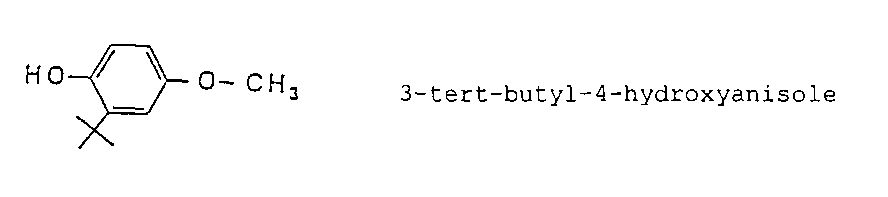

This example clearly demonstrates that replacing only one hydroxy group in the substituted aromatic compound of Example 1 by an alkoxy group changes the compound from being an excellent solvent to a non-solvent for PANI(DBSA)_{0.5}; due to the insufficient hydrogen bonding capability of the alkoxy substituent.

A blend was prepared of PANI(DBSA)_{0.5}, 3-tert-butyl-4-hydroxyanisole (Fluka) and high density polyethylene, (HDPE, Neste NCPE 3415), according to Method C at 190°C. The electrical conductivity of the resulting blend was less 10⁻⁹ S/cm.

This result clearly illustrates that use of the non-solvent-plasticizer yielded a value of the electrical conductivity that is more than 100,000 times smaller that of the same blend composition comprising the solvent-plasticizer in Example 1.

### Example 2

Example 1 was repeated; blends were prepared, according to method C, of PANI(DBSA)_{0.5}, high density polyethylene and variety of substituted aromatic compounds, all of which were determined to be solvents for the conductive polyaniline salt complex according to Method B. The values of the electrical conductivities of the blends are collected in Table 2.

**Table 2**

| Electrical conductivities of blends of PANI(DBSA)_{0.5}, polyethylene and various substituted aromatic compounds | |
|---|---|
| Compound | Conductivity,(S/cm) |
| catechol | 3.5x10⁻² |
| hydroquinone | 1.0x10⁻⁴ |
| resorcinol | 2.1x10⁻³ |
| resorcinolmonobenzoate | 7.6x10⁻⁴ |
| 4-hydroxybenzophenone | 6.9x10⁻⁴ |
| bisphenol-A | 1.0x10⁻⁵ |
| 2,4-dihydroxyacetophenone | 2.2x10⁻² |

### Example 3

PANI(DBSA)_{0.5} was mixed with propyl-3,4,5-trihydroxybenzoate (propyl gallate, PG; Merck) at 200 °C according to Method B and found to form a homogeneous solution.

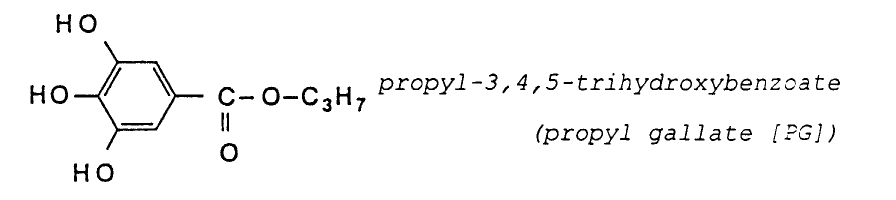

A polymer blend was prepared according to Method D from PANI(DBSA)_{0.5}, propyl gallate, and polypropylene. The measured electrical conductivity of the resulting blend was 5.1x10⁻² S/cm.

### Comparative Example V (Outside of the Invention)

PANI(DBSA)_{0.5} was mixed at 200°C with alkyldimethylolphenol (SP 1045, Schenectady Corp.) according to Method B. It was found that this substituted aromatic compound was not a solvent for PANI(DBSA)_{0.5}.

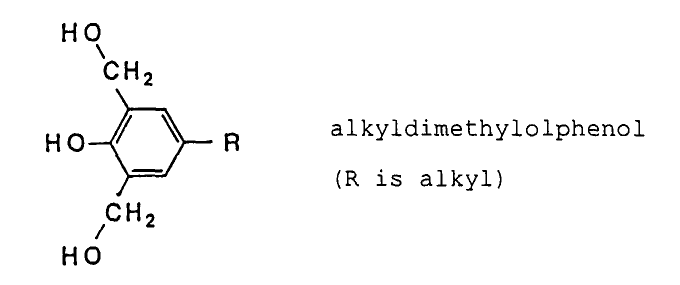

This example demonstrates that the position of the three OH-groups relative to the phenyl ring is critical.

A polymer blend was prepared according to Method C from PANI(DBSA)_{0.5}, alkyldimethylolphenol, and polyethylene. The measured electrical conductivity of the resulting blend was less 10⁻⁹ S/cm.

### Example 4

Example 3 was repeated; blends were prepared, according to method D, of PANI(DBSA)_{0.5}, polypropylene and great variety of substituted aromatic compounds, all of which were determined to be solvents for the conductive polyaniline salt complex according to Method B. The values of the electrical conductivities of the blends are collected in Table 3.

**Table 3**

| Electrical conductivities of blends of PANI(DBSA)_{0.5}, polypropylene and various substituted aromatic compounds | |
|---|---|
| Compound | Conductivity, (S/cm) |
| 4-phenylphenol | 1.9x10⁻³ |
| 2-phenylphenol | 1.9x10⁻³ |
| hydroquinone benzyl ether | 6.3x10⁻⁵ |
| benzyl 4-hydroxybenzoate | 1.3x10⁻³ |
| bisphenol A | 1.3x10⁻⁵ |
| dodecyl 4-hydroxybenzoate | 4.0x10⁻⁴ |
| ethyl dihydroxybenzoate | 1.4x10⁻³ |
| 3,3'-ethylenedioxydiphenol | 1.1x10⁻⁴ |
| tert-butylhydroquinone | 3.5x10⁻⁴ |
| tert-butylcatechol | 3.4x10⁻⁴ |
| phenylhydroquinone | 3.8x10⁻⁴ |
| p-cumylphenol | 3.8x10⁻² |
| 2,4-dihydroxybenzophenone | 1.4x10⁻⁴ |
| dodecylresorcinol | 2.1x10⁻² |
| 2-hydroxydiphenylmethan | 9.0x10⁻² |
| 2,3,4-trihydroxybenzophenone | 5.6x10⁻⁴ |
| ethyl gallate | 2.3x10⁻² |
| stearyl gallate | 3.4x10⁻¹ |

### Example 5

Example 3 was repeated, but instead of 1.05g, only 0.53g of the substituted aromatic compound was used; blends were prepared, according to method D, of PANI(DBSA)_{0.5}, polypropylene and variety of gallates, all of which were determined to be solvents for the conductive polyaniline salt complex according to Method B. The values of the electrical conductivities of the blends are collected in Table 4.

**Table 4**

| Electrical conductivities of blends of PANI(DBSA)_{0.5}, polypropylene and various gallates* | |
|---|---|
| Compound | Conductivity, (S/cm) |
| ethyl gallate (EG) | 7.1x10⁻³ |
| propyl gallate (PG) | 9.1x10⁻³ |
| butyl gallate | 6.6x10⁻² |
| iso-amyl gallate | 3.6x10⁻² |
| octyl gallate | 2.1x10⁻² |
| dodecyl gallate | 1.6x10⁻² |
| cetyl gallate | 1.1x10⁻² |
| stearyl gallate (SG) | 7.4x10⁻⁴ |

| | |
|---|---|
| * a significantly smaller amount of gallates was employed. | |

### Example 6

Example 3 was repeated, but instead of PANI(DBSA)_{0.5}, conductive polyaniline salt complexes were used that were protonated with CSA, TSA, according to Method A-2. HCl-protonated PANI was used directly as recovered from the polymerization in Method A-1. Blends were prepared, according to method D, of the salt complexes, polypropylene and various substituted aromatic compounds. The values of the electrical conductivities of the blends are collected in Table 5.

**Table 5**

| Electrical conductivities of blends of polypropylene, various substituted aromatic compounds, and polyaniline protonated with different acids. | | |
|---|---|---|
| Protonic Acid | Subst. Arom. Compound | Conductivity, (S/cm) |
| CSA | EG | 2.2x10⁻³ |
| CSA | PG | 1.0x10⁻³ |
| CSA | SG | 2.3x10⁻¹ |
| CSA | HBBzE* | 3.0x10⁻³ |
| TSA | SG | 5.3x10⁻¹ |
| TSA | EG | 1.0x10⁻⁶ |
| TSA | dodecylresorcinol | 2.2x10⁻³ |
| TSA | HBDE** | 4.0x10⁻⁴ |
| HCl | SG | <6x10⁻¹¹ |

| | | |
|---|---|---|
| *HBBzE: p-hydroxybenzoic acid benzyl ester | | |
| **HBDE: p-hydroxybenzoic acid dodecyl ester | | |

In all of the above cases the substituted aromatic compounds were solvents for the conductive polyaniline salt complexes; except for the complex protonated with HCl. As is clear from the above table, the latter blend, accordingly, did not exhibit an improved conductivity.

### Example 7

Blends were prepared according to the procedures of Method D [however, at 190 °C, instead of 170 °C] of nylon 12 (Polysciences), PANI(CSA)_{0.5}, and EG and SG, which both dissolve the conductive complex. The electrical conductivities were measured to be 1x10⁻³ and 1x10⁻¹¹ for the compositions containing EG and SG, respectively. This example shows that the substituted aromatic compounds that dissolve conductive polyaniline salt complexes need to be compatible with the physico-chemical nature of the insulating matrix polymer. Here, the polar nylon 12 displays a dramatically enhanced conductivity with the gallate EG, which is relatively polar. By contrast, the very long alkyl tail of SG is nonpolar, and therefore not optimal for blending with nylon 12, leading to a very low conductivity.

The inverse phenomenon, although somewhat less dramatic, is seen in some blends of Example 6. Here PANI(TSA)_{0.5} was mixed with SG and EG into the nonpolar polypropylene. Due to the non-polar alkyl tail of SG, the composition containing this gallate has a much higher conductivity than the blends comprising the more polar EG; see Table 5.

### Example 8

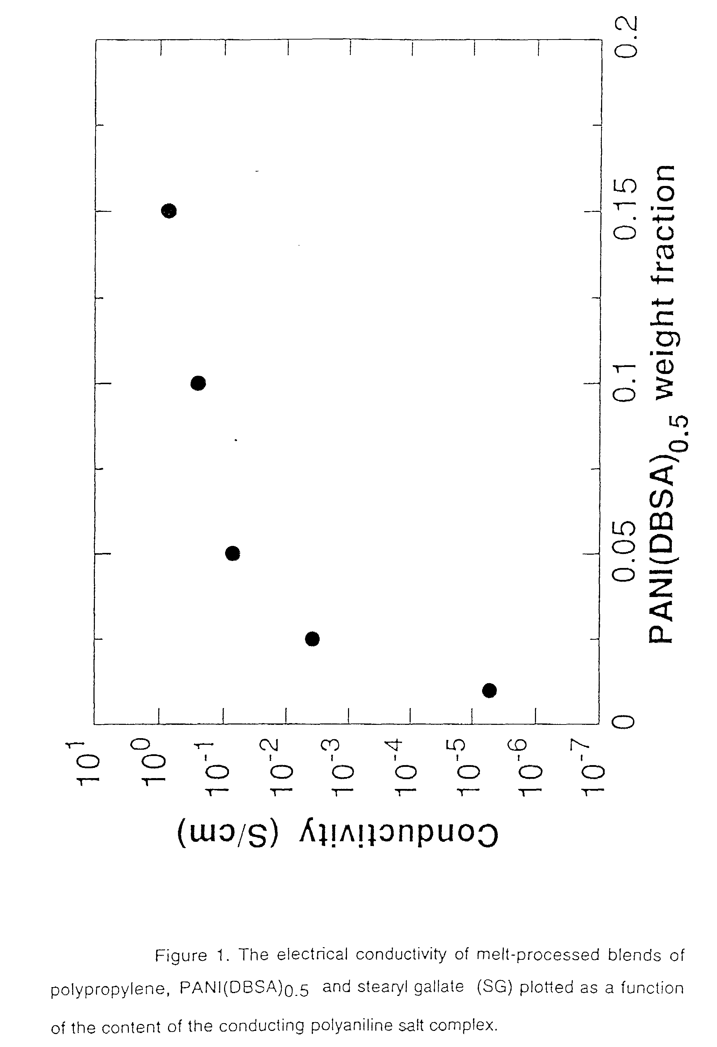

Blends were prepared according to Method D of polypropylene and various amounts of PANI(DBSA)_{0.5}. Stearyl gallate (SG) was employed as the substituted aromatic compound. The electrical conductivity of the blends are plotted as a function of the content of the conducting polyaniline salt complex in Figure 1. This graph shows that the blend prepared according to this invention displays a percolation threshold of less than 1 % by weight of PANI(DBSA)_{0.5}.

### Example 9

Example 8 was repeated with nylon 12, PANI(CSA)_{0.5}, and EG instead of polypropylene, PANI(DBSA)_{0.5} and SG. Mixing was carried out at 190 °C. The electrical conductivity of the blends as a function of the content of the conducting polyaniline salt complex was very similar as the results plotted in Figure 1.

### Example 10

An amount of 2.538 g (0.01 M) of PANI(DBSA)_{0.5} salt prepared according to Method A-2 was mixed with 2.112 g (0.005 M) stearyl gallate (SG) (Tokyo Kasei) in a miniature conical twin-screw extruder at 170 °C during 5 min. The resulting PANI(DBSA)_{0.5}(SG)_{0.5} complex was pulled out from the orifice of the extruder as continuous filament. In the same manner, PANI(CSA)_{0.5}, PANI(TSA)_{0.5} were complexed with SG at the same molar ratio at 170 °C during 5 min.

### Example 11

Example 10 was repeated, but ethyl gallate (EG) and phenylhydroquinone (PhHQ) were used at molar ratio 0.5 to PANI(DBSA)_{0.5} instead of SG.

### Example 12

The polyaniline compositions of Examples 10 and 11 were characterized by differential scanning calorimetry, conductivity of pressed pellets or films; and wide-angle X-ray diffraction patterns.

Conductivity of thin films or pellets pressed at 170 °C measured by the usual four probe method are listed in Table 6.

**Table 6**

| Conductivity of various conductive PANI salt complexes. | |
|---|---|
| Composition | Conductivity (S/cm) |
| PANI(DBSA)_{0.5} | 0.6 |
| PANI(DBSA)_{0.5}(EG)_{0.5} | 14.1 |
| PANI(DBSA)_{0.5}(SG)_{0.5} | 14.5 |
| PANI(DBSA)_{0.5}(PhHQ)_{0.5} | 2.2 |
| | |
| PANI(CSA)_{0.5} | 0.7 |
| PANI(CSA)_{0.5}(EG)_{0.5} | 7.0 |
| PANI(CSA)_{0.5}(SG)_{0.5} | 15.7 |
| | |
| PANI(TSA)_{0.5} | - |
| PANI(TSA)_{0.5}(EG)_{0.5} | 3.0 |
| PANI(TSA)_{0.5}(SG)_{0.5} | 10.3 |

The data in this table demonstrate that the conductivity values of the compositions with EG and SG additives is higher than in those without, despite the fact that the weight fraction of these [not electrically conductive] additives in the final compositions is ca. 30% and 50% for EG and SG, respectively.

Melting points of these complexes were determined by differential scanning calorimetry (Mettler TA 3000; scan rate 10 °C/min), and are listed in Table 7.

**Table 7**

| Melting points of various PANI salt complexes. | |
|---|---|
| Composition | Melting point (°C) |
| EG (for reference) | 145.6 |
| SG (for reference) | 106.2 |
| | |
| PANI(DBSA)_{0.5}(EG)_{0.5} | 97.5 |
| PANI(DBSA)_{0.5}(SG)_{0.5} | 80.5 |
| | |
| PANI(CSA)_{0.5}(EG)_{0.5} | 130.2 |
| PANI(CSA)_{0.5}(SG)_{0.5} | 76.5 |
| | |
| PANI(TSA)_{0.5}(EG)_{0.5} | 111.2 |
| PANI(TSA)_{0.5}(SG)_{0.5} | 85.8 |

In the polarizing optical microscope, at the temperature denoted above, these complexes became transparent green highly viscous fluids, which displayed birefrigence after mild shearing. These results indicate that the polyaniline complexes PANI(DBSA)_{0.5}, PANI(CSA)_{0.5} and PANI(TSA)_{0.5} [which themselves are not meltable below their respective decomposition temperatures] displayed a melting point after complexing with 0.5 mole (per one PhN unit) of these substituted compounds. The data also reveal that the melting temperature can be controlled by the selection of the chemical nature of these compounds.

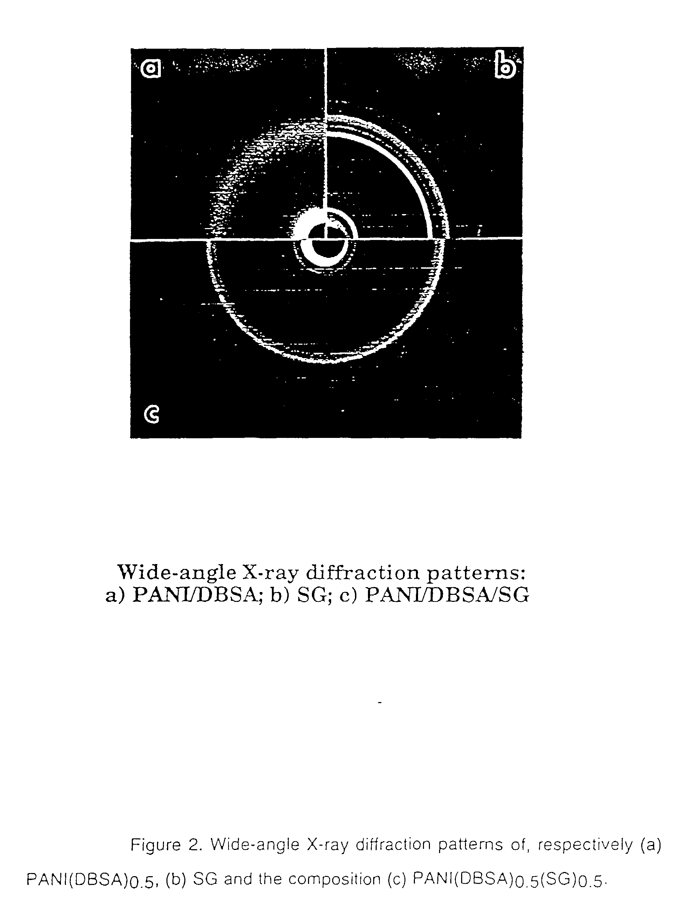

Wide-angle X-ray diffraction patterns of (a) PANI(DBSA)_{0.5}, (b) SG and (c) the composition PANI(DBSA)_{0.5}(SG)_{0.5} are shown in Fig. 2. From these patterns it is clear that a new crystal phase was obtained after complexing of PANI salts containing 0.5 moles protonic acid with the solvating compounds SG. All strong reflections of SG disappeared after complexing and the spacings of PANI(DBSA)_{0.5}(SG)_{0.5} are found at different angles from those of the initial PANI(DBSA)_{0.5} complexes. In addition, it is revealed by these patterns that the crystallinity is also improved by 0.5 mole solvating compound that were incorporated into PANI lattice. Similar results were obtained for the PANI(CSA)_{0.5}(SG)_{0.5} and PANI(TSA)_{0.5}(SG)_{0.5}; and other substituted aromatic compounds such as EG, PG, DG and phenylhydroquinone.

These results suggest unambiguously that conductive PANI salts may form crystalline solvates with substituted compounds of new crystal structures, and controlled melting temperatures.

## Claims

1. Fluid-phase processible electrically conductive polymeric composition comprising an admixture of:
(a) one or more electrically conductive polymers selected from electrically conducting, protonated polyaniline, substituted polyanilines, or copolymers thereof;
(b) one or more substituted compounds according to Formulas IV-IX: 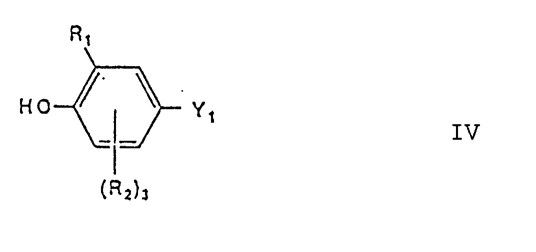 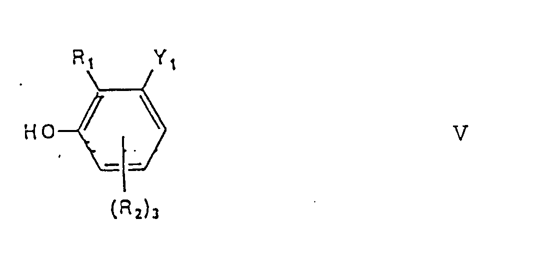 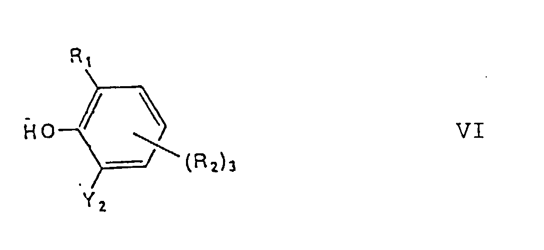 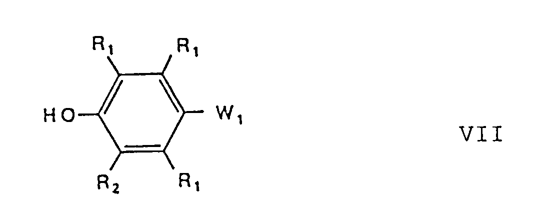 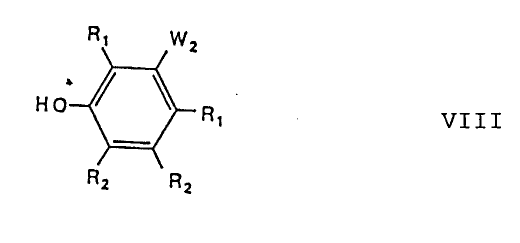 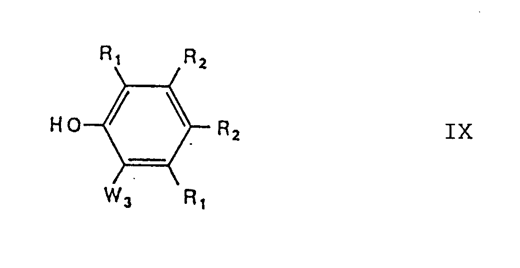
wherein:
R₁ is independently selected so as to be the same or different at each occurrence and is selected from H, OH, CH₃ or OCH₃; where one or more H can be substituted by the halogens F or Cl; except in -OH;
R₂ is independently selected so as to be the same or different at each occurrence and is selected from H, OH, alkyl, alkenyl, alkoxy, alkanoyl, alkylthio, alkylthioalkyl, alkyl amide, alkylamidealkyl, alkyl hydroxy, alkyl carboxyl, having from 1 to 20 carbon atoms; or alkylaryl, arylalkyl, alkylsulfinyl, alkoxyalkyl, alkylsulfonyl, alkoxycarbonyl, where the alkyl or alkoxy has from 1 to 20 carbon atoms; or alkyl having from 1 to 20 carbon atoms; or any two R₂ groups together may form an alkylene or alkenylene chain completing a 3, 4, 5, 6, or 7-membered aromatic or alicyclic ring, which ring may optionally include one or more nitrogen, sulfur or oxygen atoms; R₂ can be branched and can be tert-alkyl, the alkyl having from 1 to 20 carbon atoms; R₂ may include one or more of the polar substitutes -NO₂, or -CN, or the halogens, -F, -Cl, -Br, -I;
Y₁ is selected from -OH, -COOH, -COO-Z, -CO-Z, -SO-Z, -SO₂-Z, -OCOO-Z, wherein Z = alkyl with 1 to 20 carbon atoms preferably more than 10 carbon atoms;
Y₂ is -OH,;
W₁ is selected from X₁, -C(CₙH₂ₙ₊₁) (CₘH₂ₘ₊₁)-X₁, where n and m are integers from 1 to 20, -COO-X₁, -CO-X₁, -OCO-X₁, -CH₂-O-X₁, -O-CH₂-X₁, -O-X₁, -S-X₁, -SO-X₁, -SO₂-X₁, -OCOO-X₁, cyclohexane, or 5 or 6-membered aromatic, heteroalicyclic, heteroaromatic or alicyclic carbon ring; and
W₂ is selected from X₁, -C(CₙH₂ₙ₊₁) (CₘH₂ₘ₊₁)-X₁, where n and m are integers from 1 to 20, -COO-X₁, -CO-X₁, -OCO-X₁, -O-X₁, -S-X₁, -SO-X₁,-SO₂-X₁, -OCOO-X₁, -COO-CH₂-X₁, -OCO-CH₂-X₁, -CH₂-COO-X₁-CH₂-OCO-X₁ -O-C₂H₄-O-X₁, cyclohexane, or 5 or 6-membered aromatic, heteroalicyclic, heteroaromatic or alicyclic carbon ring; and
W₃ is selected from X₁, -C(CₙH₂ₙ₊₁) (CₘH₂ₘ₊₁)-X₁, where n and m are integers from 1 to 20, -COO-X₁, -CO-X₁, -OCO-X₁, -O-X₁, -S-X₁, -SO-X₁, -SO₂-X₁, -OCOO-X₁, -CH₂-X₁, cyclohexane, or 5 or 6-membered aromatic, heteroalicyclic, heteroaromatic or alicyclic carbon ring; and 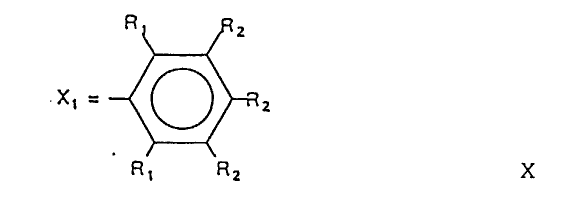 wherein R₁ and R₂ are as described above; wherein the mixtures of the substituted compounds and the electrically conductive polymers form crystalline solvates.

2. Electrically conductive polymeric composition according to claim 1 further comprising from 1 to 99.95 weight percent of one or more substantially insulating or semiconducting polymers or pre-polymers.

3. Electrically conducting composition according to claim 1 wherein in said substituted compounds at least one R₁, R₂, Y₁, Y₂, W₁, W₂ or W₃ substituent adjacent to at least one -OH substituent on any benzene ring is selected from H and -OH.

4. Electrically conducting composition according to claim 2 wherein said substantially insulating or semiconducting polymer is a thermoplastic polymer or thermoplastic pre-polymer.

5. Electrically conducting composition according to claim 2 wherein said substantially or semiconducting polymer is a thermoset polymer.

6. Electrically conducting compositions according to any one of the preceding claims, wherein said compositions have an electrical conductivity of at least 10⁻⁹ S/cm.

7. Electrically conducting compositions according to claim 6 wherein said compositions have an electrical conductivity of at least 10⁻⁶ S/cm.

8. Electrically conducting composition according to claim 7 wherein said composition has an electrical conductivity of at least 10⁻³ S/cm.

9. Electrically conducting composition according to claim 8 wherein said composition has an electrical conductivity of at least 1 S/cm.

10. Electrically conducting compositions according to any one of the preceding claims, wherein said processing is carried out at a temperature of at least 50 °C.

11. Electrically conducting compositions according to claim 10 wherein said processing is carried out at a temperature of at least 100 °C.

12. Electrically conducting compositions according to claim 11 wherein said processing is carried out at a temperature of at least 150 °C.

13. Compositions comprising crystalline solvates which are formed by
i. one or more electrically conductive polymers selected from electrically conducting, protonated polyaniline, substituted polyanilines, or copolymers thereof;
ii. one or more substituted compounds as defined in claim 1;
said crystalline solvates having crystalline structures that are different from that of any of its constituents.

14. Compositions according to claim 13 further comprising from 1 to 99.95 weight percent of one or more substantially insulating or semiconducting polymers or pre-polymers.

15. Fluid-phase processible electrically conductive polymeric composition of comprising an admixture of (a) as defined in claim 1 and a substituted aromatic compound (b) as defined in claim 1 forming part of an oligomeric or polymeric chain molecule and which may further comprise from 1 to 99.95 weight percent of one or more substantially insulating or semiconducting polymers or pre-polymers.

16. Electrically conductive articles made from the compositions according to any one of the preceding claims.

17. Use of substituted compounds as defined in claims 1, 3 or 15 as solvents or co-solvents for electrically conducting, protonated polyaniline, substituted polyanilines, or copolymers thereof.

18. The use of a composition according to any one of claims 1 to 15 in electrically conductive articles.

## Patentansprüche

1. In einer flüssigen Phase verarbeitbare, elektrisch leitfähige polymere Zusammensetzung, umfassend eine Mischung aus:
(a) einem oder mehreren elektrisch leitfähigen Polymeren, ausgewählt aus elektrisch leitfähigen, protonierten Polyanilinen, substituierten Polyanilinen oder Copolymeren davon;
(b) ein oder mehreren substituierten Verbindungen gemäß den Formeln IV-IX: 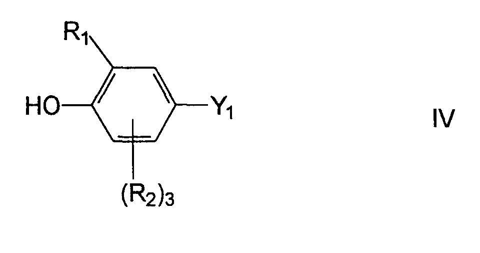 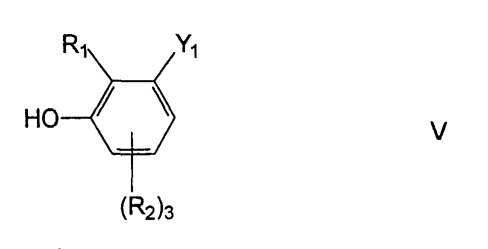 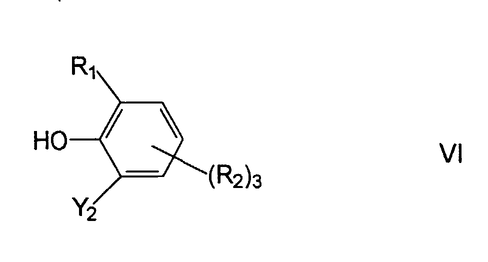 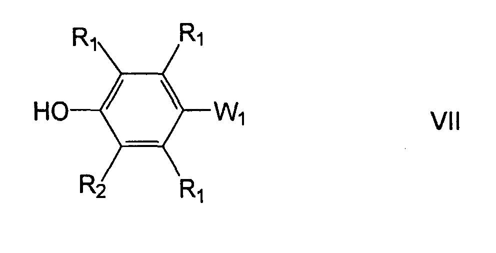 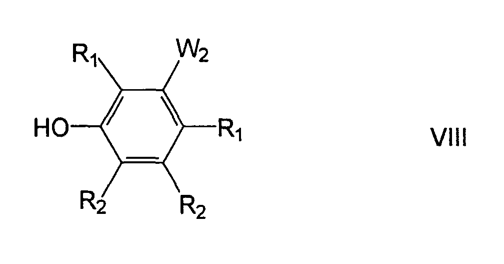 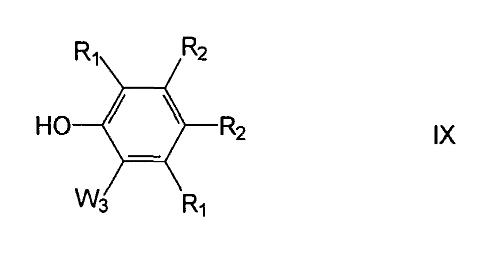
worin
R₁ unabhängig ausgewählt ist, so daß es bei jedem Auftreten gleich oder verschieden ist, und ausgewählt ist aus H, OH, CH₃ oder OCH₃; wobei ein oder mehrere H durch die Halogene F oder Cl substituiert sein können; außer bei -OH;
R₂ unabhängig ausgewählt ist, so daß es bei jedem Auftreten gleich oder verschieden sein kann, und ausgewählt ist aus H, OH, Alkyl, Alkenyl, Alkoxy, Alkanoyl, Alkylthio, Alkylthioalkyl, Alkylamid, Alkylamidalkyl, Alkylhydroxy, Alkylcarboxyl mit 1 bis 20 Kohlenstoffatomen; oder Alkylaryl, Arylalkyl, Alkylsulfinyl, Alkoxyalkyl, Alkylsulfonyl, Alkoxycarbonyl, wobei Alkyl oder Alkoxy von 1 bis 20 Kohlenstoffatome hat; oder Alkyl von 1 bis 20 Kohlenstoffatome hat; oder zwei beliebige R₂ Gruppen zusammen eine Alkylen- oder Alkenylenkette bilden, so daß ein kompletter, 3-, 4-, 5-, 6- oder 7-gliedriger aromatischer oder alizyklischer Ring geformt wird, wobei der Ring fakultativ ein oder mehrere Stickstoff-, Schwefel- oder Sauerstoffatome enthalten kann; R₂ kann verzweigt sein und kann tert-Alkyl sein, wobei die Alkylgruppe 1 bis 20 Kohlenstoffatome hat; R₂ kann ein oder mehrere der polaren Substituenten -NO₂ oder -CN, oder die Halogene -F, -Cl, -Br, -I enthalten;
Y₁ ausgewählt ist aus -OH, -COOH, -COO-Z, -CO-Z, -SO-Z, -SO₂-Z, -OCOO-Z, worin Z Alkyl mit 1 bis 20 Kohlenstoffatomen, bevorzugt mehr als 10 Kohlenstoffatomen, ist;
Y₂ -OH ist;
W₁ ausgewählt ist aus X₁, -C(CₙH₂ₙ₊₁) (CₘH₂ₘ₊₁)-X₁, wobei n und m ganze Zahlen von 1 bis 20 sind, -COO-X₁, -CO-X₁, -OCO-X₁, -CH₂-O-X₁, -O-CH₂-X₁, -O-X₁, -S-X₁, -SO-X₁, -SO₂-X₁, -OCOO-X₁, Cyclohexan oder einem 5- oder 6-gliedrigen aromatischen, heteroalizyklischen, heteroaromatischen oder alizyklischen Kohlenstoffring; und
W₂ ausgewählt ist aus X₁, -C(CₙH₂ₙ₊₁)(CₘH₂ₘ₊₁)-X₁, wobei n und m ganze Zahlen von 1 bis 20 sind, -COO-X₁, -CO-X₁, -OCO-X₁, -O-X₁, -S-X₁, -SO-X₁, -SO₂-X₁, -OCOO-X₁, -COO-CH₂-X₁, -OCO-CH₂-X₁, -CH₂-COO-X₁-CH₂-OCO-X₁, -O-C₂H₄-O-X₁, Cyclohexan oder einem 5- oder 6-gliedrigen aromatischen, heteroalizyklischen, heteroaromatischen oder alizyklischen Kohlenstoffring; und
W₃ ausgewählt ist aus X₁, -C(CₙH₂ₙ₊₁)(CₘH₂ₘ₊₁)-X₁, wobei n und m ganze Zahlen von 1 bis 20 sind, -COO-X₁, -CO-X₁, -OCO-X₁, -O-X₁, -S-X₁, -SO-X₁, -SO₂-X₁, -OCOO-X₁, -CH₂-X₁, Cyclohexan oder einem 5- oder 6-gliedrigen aromatischen, heteroalizyklischen, heteroaromatischen oder alizyklischen Kohlenstoffring; und 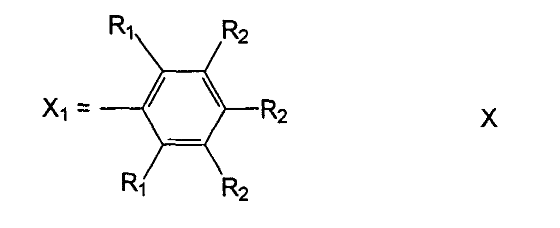 worin R₁ und R₂ wie oben beschrieben sind; worin die Mischungen der substituierten Verbindungen und der elektrisch leitfähigen Polymere kristalline Solvate bilden.

2. Elektrisch leitfähige polymere Zusammensetzung gemäß Anspruch 1, welche des weiteren 1 bis 99,95 Gew.% von einem oder mehreren im wesentlichen isolierenden oder halbleitenden Polymeren oder Prepolymeren umfaßt.

3. Elektrisch leitfähige Zusammensetzung gemäß Anspruch 1, worin bei den substituierten Verbindungen mindestens ein R₁, R₂, Y₁, Y₂, W₁, W₂ oder W₃ Substituent benachbart zu mindestens einem -OH Substituenten eines beliebigen Benzolrings, ausgewählt ist aus H und -OH.

4. Elektrisch leitfähige Zusammensetzung gemäß Anspruch 2, worin das im wesentlichen isolierende oder halbleitende Polymer ein thermoplastisches Polymer oder thermoplastisches Prepolymer ist.

5. Elektrisch leitfähige Zusammensetzung gemäß Anspruch 2, worin das im wesentlichen isolierende oder halbleitende Polymer ein Duroplastpolymer ist.

6. Elektrisch leitfähige Zusammensetzung gemäß einem der vorherigen Ansprüche, worin die Zusammensetzungen eine elektrische Leitfähigkeit von mindestens 10⁻⁹ S/cm haben.

7. Elektrisch leitfähige Zusammensetzung gemäß Anspruch 6, worin die Zusammensetzungen eine elektrische Leitfähigkeit von mindestens 10⁻⁶ S/cm haben.

8. Elektrisch leitfähige Zusammensetzung gemäß Anspruch 7, worin die Zusammensetzungen eine elektrische Leitfähigkeit von mindestens 10⁻³ S/cm haben.

9. Elektrisch leitfähige Zusammensetzung gemäß Anspruch 8, worin die Zusammensetzung eine elektrische Leitfähigkeit von mindestens 1 S/cm hat.

10. Elektrisch leitfähige Zusammensetzungen gemäß einem der vorherigen Ansprüche, wobei die Herstellung bei einer Temperatur von mindestens 50°C durchgeführt wird.

11. Elektrisch leitfähige Zusammensetzungen gemäß Anspruch 10, wobei die Herstellung bei einer Temperatur von mindestens 100°C durchgeführt wird.

12. Elektrisch leitfähige Zusammensetzungen gemäß Anspruch 11, wobei die Herstellung bei einer Temperatur von mindestens 150°C durchgeführt wird.

13. Zusammensetzungen enthaltend kristalline Solvate, die aus
(i) einem oder mehreren elektrisch leitfähigen Polymeren, ausgewählt aus elektrisch leitfähigen, protonierten Polyanilinen, substituierten Polyanilinen oder Copolymeren davon;
(ii) einem oder mehreren substituierten Verbindungen, wie in Anspruch 1 definiert,
gebildet werden; diese kristallinen Solvate haben eine kristalline Struktur, die unterschiedlich zu irgendeiner ihrer Bestandteile ist.

14. Zusammensetzungen gemäß Anspruch 13, die des weiteren 1 bis 99,95 Gew.% von einem oder mehreren im wesentlichen isolierenden oder halbleitenden Polymeren oder Prepolymeren umfaßt.

15. In einer flüssigen Phase verarbeitbare, elektrisch leitfähige polymere Zusammensetzung, umfassend eine Mischung aus (a), wie in Anspruch 1 definiert, und einer substituierten aromatischen Verbindung (b), wie in Anspruch 1 definiert, die einen Teil eines oligomeren oder polymeren Kettenmoleküls bildet und die des weiteren 1 bis 99,95 Gew.% von einem oder mehreren im wesentlichen isolierenden oder halbleitenden Polymeren oder Prepolymeren umfaßt.

16. Elektrisch leitfähige Artikel, die aus Zusammensetzungen gemäß einem der vorherigen Ansprüche gemacht wurden.

17. Verwendung von substituierten Verbindungen, wie in Ansprüchen 1, 3 oder 15 definiert, als Lösungsmittel oder Kolösungsmittel für elektrisch leitfähige, protonierte Polyaniline, substituierte Polyaniline oder Copolymere davon.

18. Verwendung einer Zusammenssetzung gemäß einem der vorherigen Ansprüche 1 bis 15 als elektrisch leitfähige Artikel.

## Revendications

1. Composition polymère électriquement conductrice pouvant être traitée en phase fluide comprenant un mélange de :
(a) un ou plusieurs polymères électriquement conducteurs sélectionnés parmi une polyaniline protonée, des polyanilines substituées, ou des copolymères de celles-ci électriquement conducteurs,
(b) un ou plusieurs composés substitués selon les formules IV à IX : 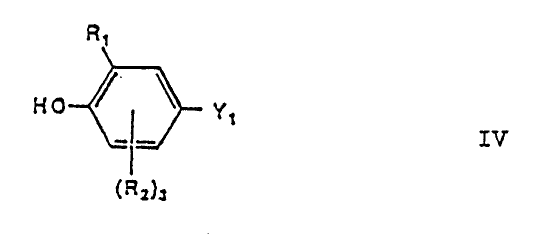 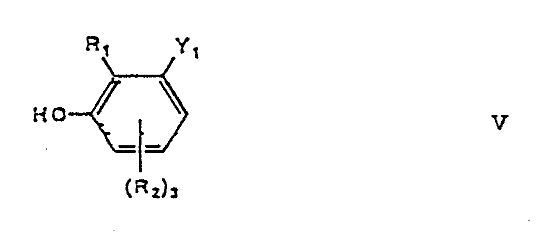 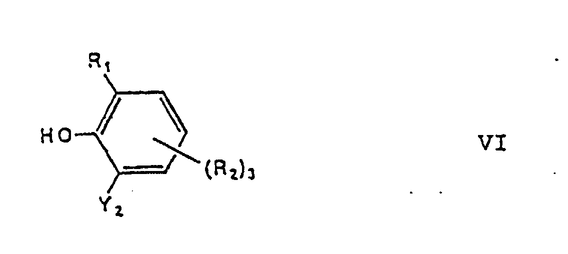 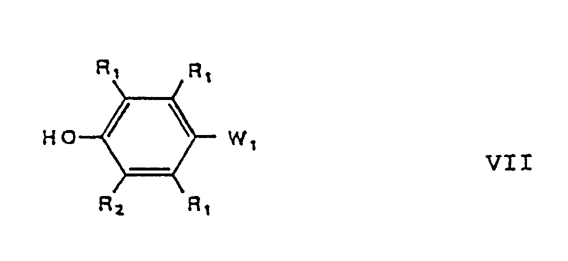 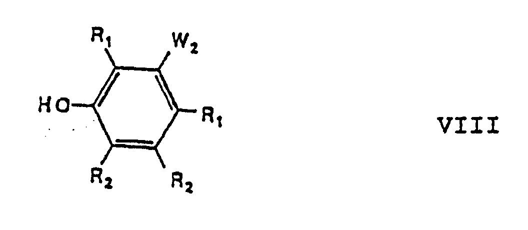 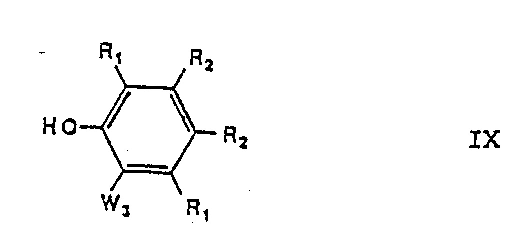
dans lesquelles :
R₁ est choisi indépendamment de façon à être identique ou différent à chaque occurrence et est sélectionné parmi H, OH, CH₃ ou OCH₃, où un ou plusieurs H peuvent être substitués par les halogènes F ou Cl, à l'exception du cas de -OH,
R₂ est sélectionné indépendamment de façon à être identique ou différent à chaque occurrence et est sélectionné à partir de H, OH, un groupe alkyle, alcényle, alcoxy, acyle, alkylthio, alkylthioalkyle, alkylamide, alkylamidealkyle, alkylhydroxy, alkylcarboxyle, comportant de 1 à 20 atomes de carbone, ou un groupe alkylaryle, arylalkyle, alkylsulfinyle, alcoxyalkyle, alkylsulfonyle, alcoxycarbonyle, où le groupe alkyle ou alcoxy comporte de 1 à 20 atomes de carbone, ou un groupe alkyle comportant de 1 à 20 atomes de carbone, ou bien deux groupes R₂ quelconques peuvent former ensemble une chaîne alcylène ou alcénylène, complétant un cycle aromatique ou alicyclique à 3, 4, 5, 6 ou 7 chaînons, lequel cycle peut comprendre facultativement un ou plusieurs atomes d'azote, de soufre ou d'oxygène, R₂ peut être ramifié et peut être un groupe tert-alkyle, le groupe alkyle comportant de 1 à 20 atomes de carbone, R₂ peut comprendre un ou plusieurs des substituants polaires -NO₂, ou -CN, ou les halogènes -F, -Cl, -Br, -I,
Y₁ est sélectionné parmi -OH, -COOH, -COO-Z, -CO-Z, -SO-Z, -SO₂-Z, -OCOO-Z, où Z = groupe alkyle comportant de 1 à 20 atomes de carbone, de préférence plus de 10 atomes de carbone,
Y₂ représente -OH,
W₁ est sélectionné parmi X₁, -C(CₙH₂ₙ₊₁₎(CₘH₂ₘ₊₁)-X₁, où n et m sont des nombres entiers de 1 à 20, -COO-X₁, -CO-X1, -OCO-X₁, -CH₂-O-X₁, -O-CH₂-X₁, -O-X₁, -S-X₁, -SO-X₁, -SO₂-X₁, -OCOO-X₁, le cyclohexane, ou un cycle carboné aromatique, hétéroalicyclique, hétéroaromatique ou alicyclique à 5 ou 6 chaînons, et
W₂ est sélectionné parmi X₁, -C(CₙH₂ₙ₊₁) (CₘH₂ₘ₊₁)-X₁, où n et m sont des nombres entiers de 1 à 20, -COO-X₁, -CO-X₁, -OCO-X₁, -O-X₁, -S-X₁, -SO-X₁, -SO₂-X₁, -OCOO-X₁, -COO-CH₂-X₁, -OCO-CH₂-X₁, -CH₂-COO-X₁-CH₂-OCO-X₁, -O-C₂H₄-O-X₁, le cyclohexane, ou un cycle carboné aromatique, hétéroalicyclique, hétéroaromatique ou alicyclique à 5 ou 6 chaînons, et
W₃ est sélectionné parmi X₁, -C(CₙH₂ₙ₊₁) (CₘH₂ₘ₊₁)-X₁, où n et m sont des nombres entiers de 1 à 20, -COO-X₁, -CO-X₁, -OCO-X₁, -O-X₁, -S-X₁, -SO-X₁, -SO₂-X₁, -OCOO-X₁, -CH₂-X₁, le cyclohexane, ou un cycle carboné aromatique, hétéroalicyclique, hétéroaromatique ou alicyclique à 5 ou 6 chaînons, et 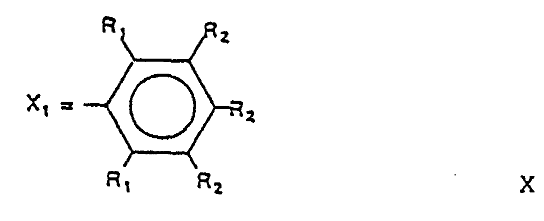 dans laquelle R₁ et R₂ sont tels que décrits ci-dessus, dans laquelle les mélanges des composés substitués et des polymères électriquement conducteurs forment des solvats cristallins.

2. Composition polymère électriquement conductrice selon la revendication 1, comprenant en outre de 1 à 99,95 pourcent en poids d'un ou plusieurs polymères ou prépolymères pratiquement isolants ou semiconducteurs.

3. Composition électriquement conductrice selon la revendication 1, dans laquelle dans lesdits composés substitués, au moins un substituant R₁, R₂, Y₁, Y₂, W₁, W₂ ou W₃ adjacent à au moins un substituant -OH sur un cycle benzénique quelconque est sélectionné parmi H et -OH.

4. Composition électriquement conductrice selon la revendication 2, dans laquelle ledit polymère pratiquement isolant ou semiconducteur est un polymère thermoplastique ou un prépolymère thermoplastique.

5. Composition électriquement conductrice selon la revendication 2, dans laquelle ledit polymère pratiquement isolant ou semiconducteur est un polymère thermodurcissable.

6. Compositions électriquement conductrices selon l'une quelconque des revendications précédentes, dans lesquelles lesdites compositions présentent une conductivité électrique d'au moins 10⁻⁹ S/cm.

7. Compositions électriquement conductrices selon la revendication 6, dans lesquelles lesdites compositions présentent une conductivité électrique d'au moins 10⁻⁶ S/cm.

8. Composition électriquement conductrice selon la revendication 7, dans laquelle ladite composition présente une conductivité électrique d'au moins 10⁻³ S/cm.

9. Composition électriquement conductrice selon la revendication 8, dans laquelle ladite composition présente une conductivité électrique d'au moins 1 S/cm.

10. Compositions électriquement conductrices selon l'une quelconque des revendications précédentes, dans lesquelles ledit traitement est mis en oeuvre à une température d'au moins 50°C.

11. Compositions électriquement conductrices selon la revendication 10, dans lesquelles ledit traitement est mis en oeuvre à une température d'au moins 100°C.

12. Compositions électriquement conductrices selon la revendication 11, dans lesquelles ledit traitement est mis en oeuvre à une température d'au moins 150°C.

13. Compositions comprenant des solvats cristallins qui sont formés par
i. un ou plusieurs polymères électriquement conducteurs sélectionnés parmi la polyaniline protonée, des polyanilines substituées ou des copolymères de celles-ci électriquement conducteurs,
ii. un ou plusieurs composés substitués tels que définis dans la revendication 1,
lesdits solvats cristallins présentant des structures cristallines qui sont différentes de celle de l'un quelconque de leurs constituants.

14. Compositions selon la revendication 13, comprenant en outre de 1 à 99,95 pourcent en poids d'un ou plusieurs polymères ou prépolymères pratiquement isolants ou semiconducteurs.

15. Composition polymère électriquement conductrice pouvant être traitée en phase fluide comprenant un mélange de (a) tel que défini dans la revendication 1 et un composé aromatique substitué (b) tel que défini dans la revendication 1 faisant partie d'une molécule à chaîne oligomère ou polymère et qui peut comprendre en outre de 1 à 99,95 pourcent en poids d'un ou plusieurs polymères ou prépolymères pratiquement isolants ou semiconducteurs.

16. Articles électriquement conducteurs fabriqués à partir des compositions selon l'une quelconque des revendications précédentes.

17. Utilisation de composés substitués tels que définis dans les revendications 1, 3 ou 15 en tant que solvants ou co-solvants pour une polyaniline protonée, des polyanilines substituées ou copolymères de celles-ci, électriquement conducteurs.

18. Utilisation d'une composition selon l'une quelconque des revendications 1 à 15 dans des articles électriquement conducteurs.
